# FASCICULE DE BREVET EUROPEEN

(11) **EP 2 941 365 B1**
(45) Date de publication et mention de la délivrance du brevet: **29.04.2020**
(21) Numéro de dépôt: 13785497.2
(22) Date de dépôt: 27.09.2013
(51) Int. Cl.: B60L 50/11

(54) **PROCEDE DE GESTION D'UN SYSTEME POUR ALIMENTER UN RESEAU DE BORD D'UN VEHICLE EN ENERGIE ELECTRIQUE**
ENERGIESPEICHEREINRICHTUNGSMANAGEMENTVERFAHREN ZUR VERSORGUNG EINES BORDNETZ EINES KRAFTFAHRZEUGS
MANAGEMENT PROCESS FOR SUPPLYING A VEHICLE ON-BOARD POWER SYSTEM

(30) Priorité: 10.10.2012 FR 1259670
(43) Date de publication de la demande: 11.11.2015
(73) Titulaire: Technoboost, 75116 Paris (FR)
(72) Inventeur: BELKHIRI, Abdeslam, F-92110 Clichy (FR); DA CRUZ PEREIRA, Serge, F-95310 St Ouen L'Aumône (FR); BOUCLY, Bernard, F-78150 Le Chesnay (FR)
(74) Mandataire: Ménès, Catherine
(86) Numéro de dépôt international: PCT/FR2013/052287
(87) Numéro de publication internationale: WO 2014/080098

(56) Documents cités:
- EP-A1- 2 788 228
- WO-A2-2011/057699
- DE-A1-102010 012 304
- DE-A1-102010 050 125
- DE-A1-102010 050 125
- FR-A1- 2 853 154
- FR-A1- 2 924 536
- FR-A1- 2 983 435
- US-A1- 2009 322 101

## Description

La présente invention revendique la priorité de la demande française 1259670 déposée le 10 octobre 2012.

La présente invention concerne de manière générale un procédé de gestion d'un système pour alimenter un réseau de bord d'un véhicule en énergie électrique.

La Figure 1 illustre une typologie d'un système connu, notamment du document DE102010050125 A1, pour alimenter un réseau de bord d'un véhicule en énergie électrique. Le système 1 comprend un générateur 3 (par exemple, un alternateur, un alternodémarreur ou un convertisseur continu/continu (DC/DC)), un stockeur d'énergie électrique 5 par exemple une batterie de 12V, un réseau de bord 7 incluant l'ensemble des organes électriques et électroniques du véhicule, un ensemble 9 incluant un interrupteur K et un convertisseur DC/DC 11, et un stockeur additionnel d'énergie électrique 13 qui est connecté à l'ensemble 9 et au convertisseur DC/DC 11.

Le fonctionnement du système 1 peut se décomposer en deux phases :
Phase 1 : l'interrupteur K (MOS, relais électromécanique, diode) est fermé. Le générateur 3 est entraîné par un moteur thermique du véhicule et produit de l'énergie électrique. Cette énergie électrique permet de recharger la batterie 5, d'alimenter tous les organes électriques et électroniques du réseau de bord 7 et de recharger le stockeur additionnel 13 via le convertisseur DC/DC 11 intégré dans l'ensemble 9.
Phase 2 : l'interrupteur K est ouvert. Le générateur 3 et la batterie 5 se trouvent isolé des autres organes par l'interrupteur K. Le générateur 3 peut être entrainé et produire de l'énergie électrique pour recharger la batterie 5 ou bien être arrêté et par conséquent la batterie 5 impose sa tension aux bornes du générateur 3. Le convertisseur DC/DC 11 de l'ensemble 9 et le stockeur additionnel 13 permettent de fournir l'énergie électrique au réseau de bord 7 tout en garantissant une tension du réseau de bord satisfaisante aux besoins du réseau de bord (par exemple 13,5V). Puis lorsque le stockeur additionnel 13 ne dispose plus de suffisamment d'énergie, le convertisseur DC/DC 11 intégré dans l'ensemble 9 cesse de fonctionner, l'interrupteur K se ferme et le générateur 3 et la batterie 5 deviennent la source d'énergie principale pour le réseau de bord 7.

Ces deux phases se répètent périodiquement.

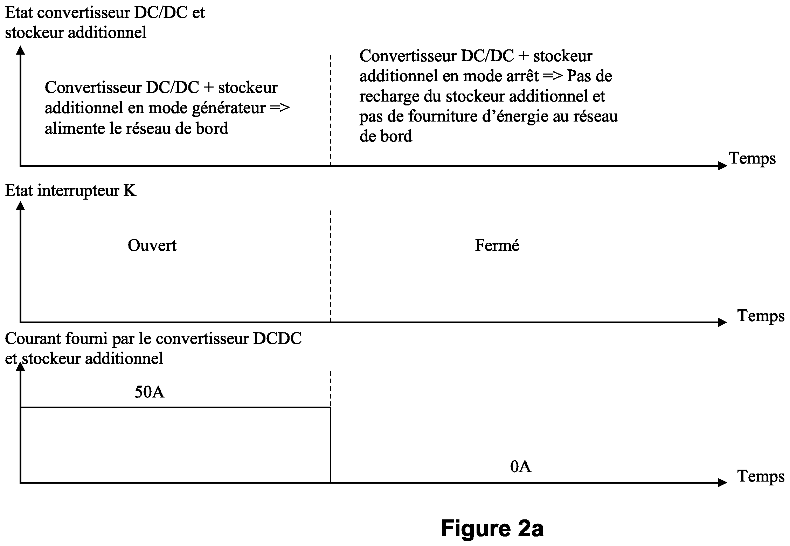

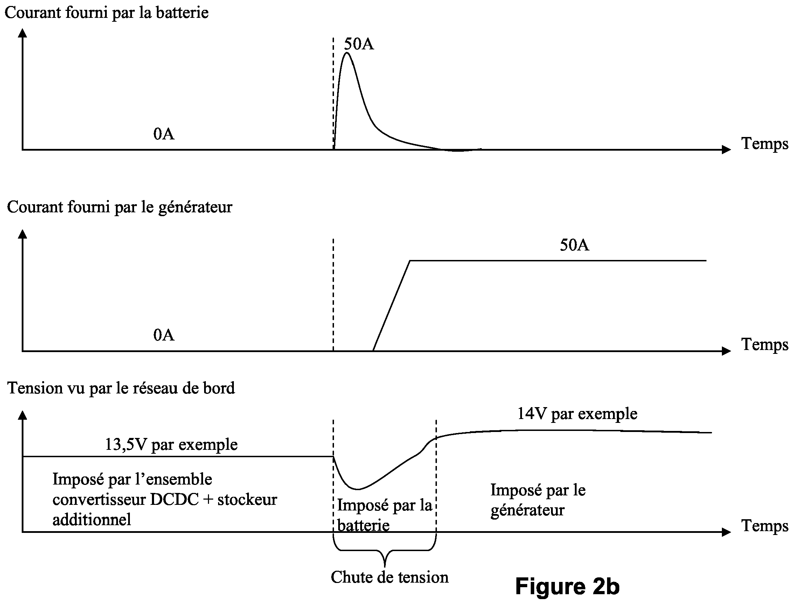

Toutefois, lors de la transition de la phase 2 à la phase 1, tel que décrit notamment dans le document FR2 924 536 A, l'arrêt du convertisseur DC/DC 11 de l'ensemble 9 peut générer une chute de tension vue par le réseau de bord 7 provoquant, par exemple, une baisse d'intensité des feux ou une réinitialisation de certains calculateurs du véhicule. Ceci est illustré dans les Figures 2A et 2B.

Supposons par exemple, que le réseau de bord représente une consommation électrique de 50A.

L'interrupteur K est ouvert, isolant ainsi le générateur 3 et la batterie 5 du convertisseur DC/DC 11, du stockeur additionnel 13 et du réseau de bord.

Lorsque le générateur 3 est arrêté, la tension de la batterie 5 est imposée aux bornes du générateur 3. Le convertisseur DC/DC 11 et le stockeur additionnel 13 fournissent 50A au réseau de bord 7 tout en régulant la tension aux bornes du réseau de bord (par exemple 13,5V).

Lorsque le convertisseur DC/DC 11 cesse de fonctionner, l'interrupteur K se ferme et la consommation du réseau de bord 7 est par conséquent directement imposée au générateur 3 et à la batterie 5. Le générateur 3 et la batterie 5 voient donc cette consommation de 50A imposée comme étant un fort appel de courant. La batterie 5 fournit temporairement ce besoin énergétique au réseau 7 avant que le générateur 3 ne reprenne la main et devienne la source d'énergie principale. Lors de la fourniture d'énergie par la batterie 5 suite à l'arrêt du convertisseur DC/DC 11, une chute de tension peut être imposée sur le réseau de bord 7 (Figure 2B).

Cette chute de tension pourrait priver d'énergie une fonction sécuritaire du véhicule.

Pour répondre aux inconvénients mentionnés ci-dessus il est connu notamment du document EP27788228 A1, un procédé de pilotage d'un générateur et du convertisseur DC/C tel que décrit dans le préambule de la revendication 1.

Toutefois, ce procédé ne permet pas de gérer de manière optimale la transition entre les deux phases de fonctionnement : interrupteur K fermé et interrupteur K ouvert, pour l'alimentation d'un réseau de bord en énergie électrique tout en permettant de fournir une tension stable qui n'entrave pas une fonction sécuritaire du véhicule.

Pour cela un premier aspect de l'invention concerne un procédé de gestion d'un système pour alimenter un réseau de bord d'un véhicule en énergie électrique, conforme à la partie caractérisante de la revendication 1.

Un tel procédé de gestion permet d'éviter une chute tension qui apparaît lors de la désactivation du convertisseur DC/DC et le stockeur additionnel, et permet de fournir une tension stable qui n'entrave pas une fonction sécuritaire du véhicule.

De manière très avantageuse, lors de l'étape d'appliquer une tension du générateur d'énergie électrique supérieure à celle du convertisseur continu/continu, la tension du générateur d'énergie électrique est augmentée jusqu'à dépasser celle du convertisseur continu/continu.

Une réalisation particulièrement intéressante consiste en ce que la tension du générateur d'énergie électrique est augmentée progressivement.

De manière avantageuse, lors de l'étape d'appliquer une tension du générateur d'énergie électrique supérieure à celle du convertisseur continu/continu, la tension du convertisseur continu/continu est diminuée jusqu'à passer en dessous de celle du générateur d'énergie électrique.

De manière avantageuse, la tension du convertisseur continu/continu est diminuée progressivement.

De manière très avantageuse, lors de l'étape d'alimenter le réseau de bord en énergie électrique par l'intermédiaire du stockeur additionnel d'énergie électrique et du convertisseur continu/continu lorsque l'interrupteur est ouvert, le générateur d'énergie électrique est désactivé et réactivé lors de l'étape de réguler le générateur d'énergie électrique pour fournir une tension inférieure à celle imposée par le convertisseur continu/continu et supérieure à une tension du stockeur d'énergie électrique.

De manière très avantageuse, lors de l'étape d'alimenter le réseau de bord en énergie électrique par l'intermédiaire du stockeur additionnel d'énergie électrique et du convertisseur continu/continu lorsque l'interrupteur est ouvert, le générateur d'énergie électrique est activé et régulé pour fournir une tension inférieure à celle imposée par le convertisseur continu/continu.

Selon un deuxième aspect, la présente l'invention concerne un système pour alimenter un réseau de bord d'un véhicule en énergie électrique comprenant :
- un réseau de bord incluant des éléments électriques ou électroniques du véhicule ;
- un stockeur d'énergie électrique ;
- un générateur d'énergie électrique relié au stockeur d'énergie électrique ;
- un stockeur additionnel d'énergie électrique ;
- un ensemble comprenant un interrupteur et un convertisseur continu/continu, l'ensemble étant relié au stockeur d'énergie électrique, au générateur d'énergie électrique et au réseau de bord d'une manière à alimenter le réseau de bord en énergie électrique par l'intermédiaire du générateur d'énergie électrique lorsque l'interrupteur est fermé, et relié au stockeur additionnel d'énergie électrique et au réseau de bord d'une manière à alimenter le réseau de bord en énergie électrique par l'intermédiaire du stockeur additionnel d'énergie électrique et du convertisseur continu/continu lorsque l'interrupteur est ouvert ;

caractérisé en ce qu'il comprend en outre un dispositif de commande configuré pour réguler le générateur d'énergie électrique pour fournir une tension inférieure à celle imposée par le convertisseur continu/continu et supérieure à une tension du stockeur d'énergie électrique lorsque l'interrupteur est ouvert, et pour appliquer au réseau de bord une tension du générateur d'énergie électrique supérieure à celle du convertisseur continu/continu lorsque l'interrupteur est fermé.

Selon un troisième aspect, la présente l'invention concerne un véhicule automobile comprenant le système tel que défini ci-dessus.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

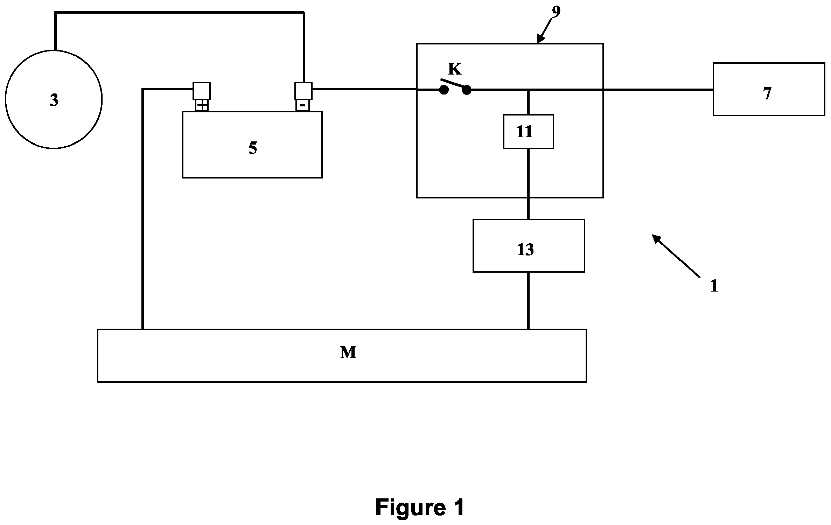

- la Figure 1 illustre un système pour alimenter un réseau de bord d'un véhicule en énergie électrique de l'état de la technique ;
- les Figures 2A et 2B illustrent une chute de tension vue par le réseau de bord due à la désactivation du convertisseur DC/DC du système illustré dans la Figure 1;
- la Figure 3 illustre un système pour alimenter un réseau de bord d'un véhicule en énergie électrique selon la présente invention ; et
- les Figures 4A et 4B illustrent l'amélioration apportée par le système pour alimenter un réseau de bord d'un véhicule en énergie électrique de la présente invention et le procédé de gestion de ce système.

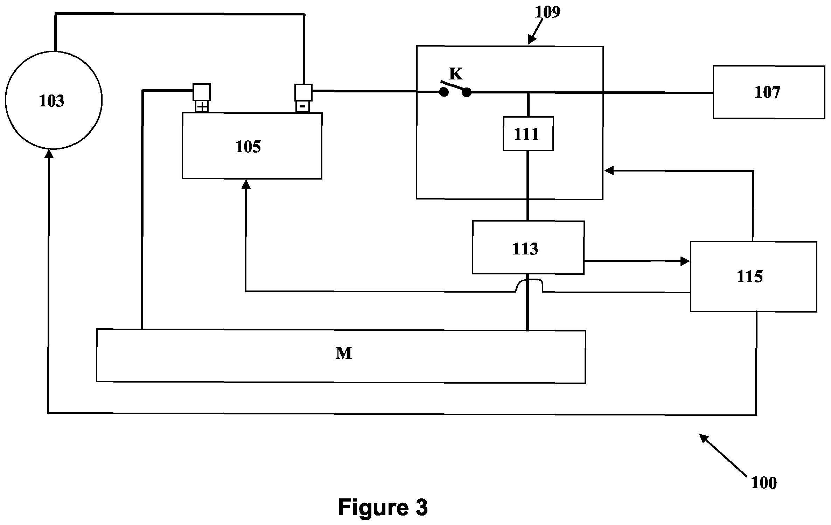

La Figure 3 illustre un système 100 pour alimenter un réseau de bord d'un véhicule en énergie électrique selon la présente invention. Le système 100 comprend un générateur d'énergie électrique 103 tel qu'un alternateur, un alternodémarreur ou un convertisseur continu/continu (par exemple, un convertisseur courant continu/courant continu ou un convertisseur tension continue), un stockeur d'énergie électrique 105 tel qu'une batterie électrochimique (de 12V par exemple), un réseau de bord 107 incluant des éléments électriques ou électroniques du véhicule, un ensemble 109 comprenant un interrupteur K et un convertisseur continu/continu (DC/DC) 111 (par exemple, un convertisseur courant continu/courant continu ou un convertisseur tension continue), un stockeur additionnel d'énergie électrique 113 tel qu'un supercondensateur ou une batterie et un dispositif de commande 115.

Le générateur d'énergie électrique 103 est relié à la borne négative de la batterie 105 et la borne positive de la batterie 105 est reliée à la masse M. L'interrupteur K est relié électriquement d'un côté à la borne négative de la batterie 105 (et au générateur d'énergie électrique 103) et de l'autre côté en série avec le réseau de bord 107. Le convertisseur DC/DC 111 est relié électriquement d'un côté entre l'interrupteur K et le réseau de bord 107 et il est relié électriquement de l'autre côté au stockeur additionnel d'énergie électrique 113. Le stockeur additionnel d'énergie électrique 113 est aussi relié électriquement à la masse M. Le dispositif de commande 115 est raccordé à l'ensemble 109, au générateur d'énergie électrique 103, au stockeur d'énergie électrique 105 et au stockeur additionnel d'énergie électrique 113.

L'interrupteur K peut être, par exemple, un interrupteur MOS, un relais électromécanique ou une diode.

Le générateur d'énergie électrique 103 est, par exemple, apte à être entraîné par un moteur thermique du véhicule afin de produire de l'énergie électrique. Cette énergie électrique permet de recharger le stockeur d'énergie électrique 105, d'alimenter tous les organes électriques et électroniques du réseau de bord 107 et de recharger le stockeur additionnel 113 via le convertisseur DC/DC 111.

Le dispositif de commande 115 est apte à fermer l'interrupteur K pour alimenter le réseau de bord 107 en énergie électrique par l'intermédiaire du stockeur d'énergie électrique 105 ou du générateur d'énergie électrique 103 et pour recharger le stockeur additionnel 113. Le dispositif de commande 115 est aussi apte à activer et désactiver le convertisseur DC/DC 111 et à ouvrir l'interrupteur K pour alimenter le réseau de bord 107 en énergie électrique par l'intermédiaire du stockeur additionnel d'énergie électrique 113 et du convertisseur DC/DC 111.

Le dispositif de commande 115 est en outre configuré pour recevoir à partir du stockeur additionnel 113 une valeur d'un niveau de décharge du stockeur additionnel 113 et une valeur de tension appliquée par le convertisseur DC/DC 111 au réseau de bord 107. Il est en outre configuré pour recevoir à partir du stockeur d'énergie électrique 105 une valeur de tension fournie par le stockeur d'énergie électrique 105.

Il est en outre configuré pour réguler le générateur d'énergie électrique 103 pour fournir une tension inférieure à celle imposée par le convertisseur DC/DC 111 et supérieure à une tension du stockeur d'énergie électrique 105 lorsque l'interrupteur K est ouvert.

Il est configuré pour réguler le générateur d'énergie électrique 103 pour fournir une telle tension lorsque le niveau de décharge du stockeur additionnel 113 atteint une valeur prédéterminée, par exemple, 85%, ou 90% ou 95%.

Le dispositif de commande 115 est en outre configuré pour assurer l'application au réseau de bord d'une tension du générateur d'énergie électrique 103 supérieure à celle du convertisseur DC/DC 111 lorsque l'interrupteur K est fermé.

Le dispositif de commande 115 est en outre configuré pour augmenter progressivement la tension du générateur d'énergie électrique 103 est jusqu'à dépasser celle du convertisseur DC/DC 111, et pour diminuer progressivement la tension du convertisseur DC/DC 111 jusqu'à passer en dessous de celle du générateur d'énergie électrique 103.

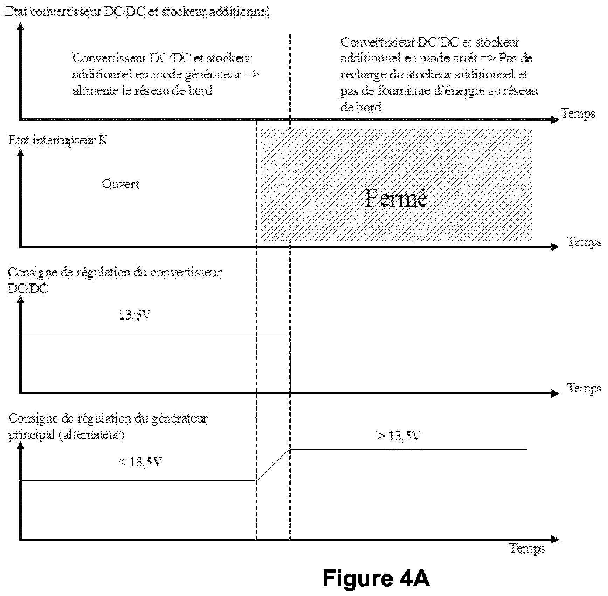

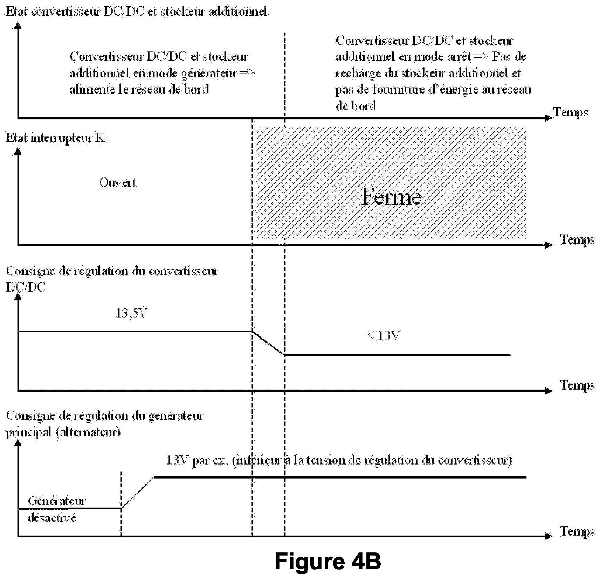

Un procédé de gestion du système 100 selon la présente invention sera maintenant décrit (Figures 4A et 4B).

Pendant la Phase 2 (décrite ci-dessus), l'interrupteur K est mis en position ouverte et le générateur d'énergie électrique 103 et le stockeur d'énergie électrique 105 se trouvent isolés des autres organes par l'interrupteur K.

Le générateur d'énergie électrique 103 est entraîné pour produire une tension inférieure à celle du convertisseur DC/DC 111, ou est arrêté.

Le convertisseur DC/DC 111 de l'ensemble 109 et le stockeur additionnel 113 fournissent de l'énergie électrique au réseau de bord 107 tout en garantissant une tension du réseau de bord satisfaisante aux besoins du réseau de bord (par exemple 13,5V).

Lorsqu'on veut utiliser le générateur d'énergie électrique 103 ou le stockeur d'énergie électrique 105 pour fournir de l'énergie électrique au réseau de bord 107 ou lorsque le niveau de décharge du stockeur additionnel 113 atteint une valeur prédéterminée, par exemple, 85%, ou 90% ou 95%, l'interrupteur K est maintenu dans une position ouverte, le générateur d'énergie électrique 103 est activé si nécessaire et est régulé pour fournir une tension inférieure à celle imposée au réseau de bord 107 par le convertisseur DC/DC 111 et supérieure à la tension du stockeur d'énergie électrique 105.

L'interrupteur K est ensuite fermé et le convertisseur DC/DC 111 impose sa tension au réseau de bord 107 car cette tension est supérieure à celle du stockeur d'énergie électrique 105 et à celle produite par le générateur d'énergie électrique 103.

Une tension du générateur d'énergie électrique 103 supérieure à celle du convertisseur DC/DC 111 est ensuite appliquée au réseau de bord 107, par exemple, en augmentant la tension du générateur d'énergie électrique 103 jusqu'à dépasser celle du convertisseur DC/DC 111 ou en diminuant la tension du convertisseur DC/DC 111 jusqu'à passer en dessous de celle du générateur d'énergie électrique 103. Le générateur d'énergie électrique 103 devient ainsi la source d'énergie principale pour le réseau de bord 107.

Le convertisseur DC/DC 111 peut être désactivé lorsque la tension du générateur d'énergie électrique 103 devient supérieure à celle du convertisseur DC/DC 111. Le stockeur additionnel 113 ne fournit plus d'énergie au réseau de bord 107.

La tension du générateur d'énergie électrique 103 est, par exemple, augmentée progressivement et la tension du convertisseur continu/ continu est, par exemple, diminuée progressivement.

Grâce à la présente invention, la chute de tension imposée sur le réseau de bord et due à la désactivation du convertisseur DC/DC est supprimée si bien que la qualité du réseau de bord est améliorée, une tension stable est toujours fournie au réseau de bord et un fonctionnement continu des fonctions sécuritaires du véhicule est assuré.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

## Revendications

1. Procédé de gestion d'un système pour alimenter un réseau de bord d'un véhicule en énergie électrique, le système comprenant :
• un réseau de bord (107) incluant des éléments électriques ou électroniques du véhicule ;
• un stockeur d'énergie électrique (105) ;
• un générateur d'énergie électrique (103) relié au stockeur d'énergie électrique (105) ;
• un stockeur additionnel d'énergie électrique (113) ; et
• un ensemble (109) comprenant un interrupteur (K) et un convertisseur continu/continu (111), l'ensemble (9) étant relié au stockeur d'énergie électrique (105), au générateur d'énergie électrique (103) et au réseau de bord (107) lorsque l'interrupteur (K) est fermé, et relié au stockeur additionnel d'énergie électrique (113) et au réseau de bord (107) lorsque l'interrupteur (K) est ouvert ;
le procédé comprenant la séquence suivante d'étapes qui consistent :
• à alimenter le réseau de bord (107) en énergie électrique par l'intermédiaire du stockeur additionnel d'énergie électrique (113) et du convertisseur continu/continu (111) lorsque l'interrupteur est ouvert ;
• à réguler le générateur d'énergie électrique (103) pour fournir une tension inférieure à celle imposée par le convertisseur continu/continu (111) et supérieure à une tension du stockeur d'énergie électrique (105) lorsque l'interrupteur (K) est ouvert et lorsque le niveau de décharge du stockeur additionnel d'énergie électrique (113) atteint une valeur prédéterminée;
• à fermer l'interrupteur (K) pour que le convertisseur continu/continu (111) impose une tension au réseau de bord (107) supérieure à celle du stockeur d'énergie électrique (105) et du générateur d'énergie électrique (103) ;
• à appliquer au réseau de bord (107) une tension du générateur d'énergie électrique (103) supérieure à celle du convertisseur continu/continu (111) afin d'alimenter le réseau de bord (107) en énergie électrique par l'intermédiaire du générateur d'énergie électrique (103); et
• à désactiver le convertisseur continu/continu.

2. Procédé selon la revendication 1, **caractérisé en ce que** lors de l'étape d'appliquer une tension du générateur d'énergie électrique (103) supérieure à celle du convertisseur continu/continu (111), la tension du générateur d'énergie électrique (103) est augmentée jusqu'à dépasser celle du convertisseur continu/continu (111).

3. Procédé selon la revendication précédente, **caractérisé en ce que** la tension du générateur d'énergie électrique (103) est augmentée progressivement.

4. Procédé selon la revendication 1, **caractérisé en ce que** lors de l'étape d'appliquer une tension du générateur d'énergie électrique (103) supérieure à celle du convertisseur continu/continu (111), la tension du convertisseur continu/continu (111) est diminuée jusqu'à passer en dessous de celle du générateur d'énergie électrique (103).

5. Procédé selon la revendication précédente, **caractérisé en ce que** la tension du convertisseur continu/continu (111) est diminuée progressivement.

6. Procédé selon l'une quelconque des revendications précédentes, **caractérisé en ce que** lors de l'étape d'alimenter le réseau de bord (107) en énergie électrique par l'intermédiaire du stockeur additionnel d'énergie électrique (113) et du convertisseur continu/continu (111) lorsque l'interrupteur (K) est ouvert, le générateur d'énergie électrique (103) est désactivé et réactivé lors de l'étape de réguler le générateur d'énergie électrique (103) pour fournir une tension inférieure à celle imposée par le convertisseur continu/continu (111) et supérieure à une tension du stockeur d'énergie électrique (105).

7. Procédé selon l'une quelconque des revendications 1 à 5, **caractérisé en ce que** lors de l'étape d'alimenter le réseau de bord (107) en énergie électrique par l'intermédiaire du stockeur additionnel d'énergie électrique (113) et du convertisseur continu/continu (111) lorsque l'interrupteur (K) est ouvert, le générateur d'énergie électrique (103) est activé et régulé pour fournir une tension inférieure à celle imposée par le convertisseur continu/continu (111).

8. Système (100) pour alimenter, selon le procédé de gestion de la revendication 1, un réseau de bord d'un véhicule en énergie électrique comprenant :
• un réseau de bord (107) incluant des éléments électriques ou électroniques du véhicule ;
• un stockeur d'énergie électrique (105) ;
• un générateur d'énergie électrique (103) relié au stockeur d'énergie électrique (105) ;
• un stockeur additionnel d'énergie électrique (113) ;
• un ensemble (109) comprenant un interrupteur (K) et un convertisseur continu/continu (111), l'ensemble (9) étant relié au stockeur d'énergie électrique (105), au générateur d'énergie électrique (103) et au réseau de bord (107) d'une manière à alimenter le réseau de bord (107) en énergie électrique par l'intermédiaire du générateur d'énergie électrique (103) lorsque l'interrupteur (K) est fermé, et relié au stockeur additionnel d'énergie électrique (113) et au réseau de bord (107) d'une manière à alimenter le réseau de bord (107) en énergie électrique par l'intermédiaire du stockeur additionnel d'énergie électrique (113) et du convertisseur continu/continu (111) lorsque l'interrupteur (K) est ouvert ;
**caractérisé en ce qu'**il comprend en outre un dispositif de commande (115) configuré pour réguler le générateur d'énergie électrique (103) pour fournir une tension inférieure à celle imposée par le convertisseur continu/continu (111) et supérieure à une tension du stockeur d'énergie électrique (105) lorsque l'interrupteur (K) est ouvert, et pour appliquer au réseau de bord (107) une tension du générateur d'énergie électrique (103) supérieure à celle du convertisseur continu/continu (111) lorsque l'interrupteur (K) est fermé.

## Patentansprüche

1. Verwaltungsverfahren eines Systems zum Versorgen eines Bordnetzes eines Fahrzeugs mit elektrischer Energie, wobei das System Folgendes umfasst:
• ein Bordnetz (107), das elektrische oder elektronische Elemente des Fahrzeugs beinhaltet;
• einen Speicher elektrischer Energie (105);
• einen Generator elektrischer Energie (103), der mit dem Speicher elektrischer Energie (105) verbunden ist;
• einen zusätzlichen Speicher elektrischer Energie (113); und
• eine Einheit (109), die einen Schalter (K) und einen Gleichstrom-/Gleichstrom-Wandler (111) umfasst, wobei die Einheit (9) mit dem Speicher elektrischer Energie (105), mit dem Generator elektrischer Energie (103) und dem Bordnetz (107) verbunden wird, wenn der Schalter (K) geschlossen wird, und mit dem zusätzlichen Speicher elektrischer Energie (113) und mit dem Bordnetz (107) verbunden wird, wenn der Schalter (K) geöffnet wird;
wobei das Verfahren die folgende Abfolge von Schritten umfasst, die aus Folgendem bestehen:
• Versorgen des Bordnetzes (107) mit elektrischer Energie über den zusätzlichen Speicher elektrischer Energie (113) und den Gleichstrom-/Gleichstrom-Wandler (111), wenn der Schalter geöffnet wird;
• Regulieren des Generators elektrischer Energie (103), um eine Spannung zu liefern, die kleiner ist als die von dem Gleichstrom-/Gleichstrom-Wandler (111) auferlegte und größer als eine Spannung des Speichers elektrischer Energie (105), wenn der Schalter (K) geöffnet wird, und wenn der Entladepegel des zusätzlichen Speichers elektrischer Energie (113) einen vorbestimmten Wert erreicht;
• Schließen des Schalters (K), damit der Gleichstrom-/Gleichstrom-Wandler (111) dem Bordnetz (107) eine Spannung auferlegt, die größer ist als die des Speichers elektrischer Energie (105) und des Generators elektrischer Energie (103);
• Anlegen an das Bordnetz (107) einer Spannung des Generators elektrischer Energie (103), die größer ist als die des Gleichstrom-/Gleichstrom-Wandlers (111), um das Bordnetz (107) mit elektrischer Energie über den Generator elektrischer Energie (103) zu versorgen; und
• Deaktivieren des Gleichstrom-/Gleichstrom-Wandlers.

2. Verfahren nach Anspruch 1, **dadurch gekennzeichnet, dass**, wenn der Schritt des Anlegens einer Spannung des Generators elektrischer Energie (103), die größer ist als die des Gleichstrom-/Gleichstrom-Wandlers (111), die Spannung des Generators elektrischer Energie (103) gesteigert wird, bis sie die des Gleichstrom-/Gleichstrom-Wandlers (111) überschreitet.

3. Verfahren nach dem vorstehenden Anspruch, **dadurch gekennzeichnet, dass** die Spannung des Generators elektrischer Energie (103) allmählich gesteigert wird.

4. Verfahren nach Anspruch 1, **dadurch gekennzeichnet, dass** bei dem Schritt des Anlegens einer Spannung des Generators elektrischer Energie (103), die größer ist als die des Gleichstrom-/Gleichstrom-Wandlers (111), die Spannung des Gleichstrom-/Gleichstrom-Wandlers (111) verringert wird, bis sie unter die des Generators elektrischer Energie (103) fällt.

5. Verfahren nach dem vorstehenden Anspruch, **dadurch gekennzeichnet, dass** die Spannung des Gleichstrom-/Gleichstrom-Wandlers (111) allmählich verringert wird.

6. Verfahren nach einem der vorstehenden Ansprüche, **dadurch gekennzeichnet, dass** bei dem Schritt des Versorgens des Bordnetzes (107) mit elektrischer Energie über den zusätzlichen Speicher elektrischer Energie (113) und den Gleichstrom-/Gleichstrom-Wandler (111), wenn der Schalter (K) geöffnet wird, der Generator elektrischer Energie (103) deaktiviert wird, und bei dem Schritt des Regulierens des Generators elektrischer Energie (103) wieder aktiviert wird, um eine Spannung zu liefern, die kleiner ist als die, die von dem Gleichstrom-/Gleichstrom-Wandler (111) auferlegt wird, und größer als eine Spannung des Speichers elektrischer Energie (105).

7. Verfahren nach einem der Ansprüche 1 bis 5, **dadurch gekennzeichnet, dass** bei dem Schritt des Versorgens des Bordnetzes (107) mit elektrischer Energie über den zusätzlichen Speicher elektrischer Energie (113) und den Gleichstrom-/Gleichstrom-Wandler (111), wenn der Schalter (K) geöffnet wird, der Generator elektrischer Energie (103) aktiviert und reguliert wird, um eine Spannung zu liefern, die niedriger ist als die von dem Gleichstrom-/Gleichstrom-Wandler (111) auferlegte.

8. Versorgungssystem (100) gemäß dem Verwaltungsverfahren des Anspruchs 1 eines Bordnetzes eines Fahrzeugs mit elektrischer Energie, das Folgendes umfasst:
• ein Bordnetz (107), das elektrische oder elektronische Elemente des Fahrzeugs beinhaltet;
• einen Speicher elektrischer Energie (105);
• einen Generator elektrischer Energie (103), der mit dem Speicher elektrischer Energie (105) verbunden ist;
• einen zusätzlichen Speicher elektrischer Energie (113);
• eine Einheit (109), die einen Schalter (K) und einen Gleichstrom-/Gleichstrom-Wandler (111) umfasst, wobei die Einheit (9) mit dem Speicher elektrischer Energie (105), dem Generator elektrischer Energie (103) und dem Bordnetz (107) derart verbunden ist, dass das Bordnetz (107) mit elektrischer Energie über den Generator elektrischer Energie (103) versorgt wird, wenn der Schalter (K) geschlossen wird, und mit dem zusätzlichen Speicher elektrischer Energie (113) und dem Bordnetz (107) derart verbunden wird, dass das Bordnetz (107) mit elektrischer Energie über den zusätzlichen Speicher elektrischer Energie (113) und den Gleichstrom-/Gleichstrom-Wandler (111) versorgt wird, wenn der Schalter (K) geöffnet wird;
**dadurch gekennzeichnet, dass** es außerdem eine Steuervorrichtung (115) umfasst, die konfiguriert ist, um den Generator elektrischer Energie (103) zu regulieren, um eine Spannung zu liefern, die kleiner ist als die, die von dem Gleichstrom-/Gleichstrom-Wandler (111) auferlegt wird, und größer ist als eine Spannung des Speichers elektrischer Energie (105), wenn der Schalter (K) geöffnet wird, und um an das Bordnetz (107) eine Spannung des Generators elektrischer Energie (103) anzulegen, die größer ist als die des Gleichstrom-/Gleichstrom-Wandlers (111), wenn der Schalter (K) geschlossen wird.

## Claims

1. Method for managing a system for supplying a vehicle electrical system with electrical energy, the system comprising:
- an electrical system (107) including electrical or electronic elements of the vehicle;
- an electrical energy storage device (105);
- an electrical energy generator (103) connected to the electrical energy storage device (105);
- an additional electrical energy storage device (113); and
- a unit (109) comprising a switch (K) and a DC/DC converter (111), the unit (9) being connected to the electrical energy storage device (105), to the electrical energy generator (103) and to the electrical system (107) when the switch (K) is closed, and connected to the additional electrical energy storage device (113) and to the electrical system (107) when the switch (K) is open;
the method comprising the following sequence of steps consisting of:
- supplying the electrical system (107) with electrical energy via the additional electrical energy storage device (113) and the DC/DC converter (111) when the switch is open;
- regulating the electrical energy generator (103) to supply voltage lower than that imposed by the DC/DC converter (111) and higher than a voltage of the electrical energy storage device (105) when the switch (K) is open and when the discharge level of the additional electrical energy storage device (113) reaches a predetermined value;
- closing the switch (K) such that the DC/DC converter (111) imposes a voltage on the electrical system (107) that is higher than that of the electrical energy storage device (105) and of the electrical energy generator (103);
- applying to the electrical system (107) a voltage of the electrical energy generator (103) that is higher than that of the DC/DC converter (111) so as to supply the electrical system (107) with electrical energy via the electrical energy generator (103); and
- deactivating the DC/DC converter.

2. Method according to claim 1, **characterised in that** during the step of applying a voltage from the electrical energy generator (103) that is higher than that of the DC/DC converter (111), the voltage from the electrical energy generator (103) is increased until it exceeds that of the DC/DC converter (111).

3. Method according to the preceding claim, **characterised in that** the voltage from the electrical energy generator (103) is increased progressively.

4. Method according to claim 1, **characterised in that** during the step of applying a voltage from the electrical energy generator (103) that is higher than that of the DC/DC converter (111), the voltage from the DC/DC converter (111) is reduced until it passes below that of the electrical energy generator (103).

5. Method according to the preceding claim, **characterised in that** the voltage from the DC/DC converter (111) is reduced progressively.

6. Method according to any preceding claim, **characterised in that** during the step of supplying the electrical system (107) with electrical energy via the additional electrical energy storage device (113) and the DC/DC converter (111) when the switch (K) is open, the electrical energy generator (103) is deactivated and reactivated during the step of regulating the electrical energy generator (103) to supply voltage lower than that imposed by the DC/DC converter (111) and higher than a voltage of the electrical energy storage device (105).

7. Method according to any of claims 1 to 5, **characterised in that** during the step of supplying the electrical system (107) with electrical energy via the additional electrical energy storage device (113) and the DC/DC converter (111) when the switch (K) is open, the electrical energy generator (103) is activated and regulated to supply voltage lower than that imposed by the DC/DC converter (111).

8. System (100) for supplying, according to the method for managing of claim 1, a vehicle electrical system with electrical energy comprising:
- an electrical system (107) including electrical or electronic elements of the vehicle;
- an electrical energy storage device (105);
- an electrical energy generator (103) connected to the electrical energy storage device (105);
- an additional electrical energy storage device (113);
- a unit (109) comprising a switch (K) and a DC/DC converter (111), the unit (9) being connected to the electrical energy storage device (105), to the electrical energy generator (103) and to the electrical system (107) in such a way as to supply the electrical system (107) with electrical energy via the electrical energy generator (103) when the switch (K) is closed, and connected to the additional electrical energy storage device (113) and to the electrical system (107) in such a way as to supply the electrical system (107) with electrical energy via the additional electrical energy storage device (113) and the DC/DC converter (111) when the switch (K) is open;
**characterised in that** it further comprises a control device (115) configured to regulate the electrical energy generator (103) to supply voltage lower than that imposed by the DC/DC converter (111) and higher than a voltage of the electrical energy storage device (105) when the switch (K) is open, and to apply to the electrical system (107) a voltage from the electrical energy generator (103) that is higher than that of the DC/DC converter (111) when the switch (K) is closed.
